# EUROPÄISCHE PATENTSCHRIFT

(11) **EP 3 571 424 B1**
(45) Veröffentlichungstag und Bekanntmachung des Hinweises auf die Patenterteilung: **23.12.2020**
(21) Anmeldenummer: 18702149.8
(22) Anmeldetag: 18.01.2018
(51) Int. Cl.: F16D 55/224, B61H 5/00

(54) **BREMSZANGENEINHEIT**
BRAKE CALIPER UNIT
ENSEMBLE ÉTRIER DE FREIN

(30) Priorität: 19.01.2017 DE 102017101028
(43) Veröffentlichungstag der Anmeldung: 27.11.2019
(73) Patentinhaber: KNORR-BREMSE Systeme für Schienenfahrzeuge GmbH, 80809 München (DE)
(72) Erfinder: MÜLLEK, Ferenc, 8000 Szekesfehervar (HU)
(86) Internationale Anmeldenummer: PCT/EP2018/051204
(87) Internationale Veröffentlichungsnummer: WO 2018/134303

(56) Entgegenhaltungen:
- DE-A1- 2 233 180
- US-A- 4 480 722

## Beschreibung

Die vorliegende Erfindung bezieht sich auf eine Bremszangeneinheit und insbesondere auf gespreizte, vorgespannte Bremszangeneinheiten für Schienenfahrzeuge.

Eine Bremszangeneinheit hält Bremsbeläge (Reibbeläge) über Bremsbelaghalterungen (Belagträger) beidseitig einer Bremsscheibe und überträgt bei einem Bremsvorgang das Bremsdrehmoment auf einen Rahmen oder ein Drehgestell von Fahrzeugen. Die zur Bremswirkung erforderliche Kraft wird durch einen Bremszylinder aufgebracht und beispielsweise über Bremshebelarme an die Bremsbelaghalterung weitergeleitet. Für eine optimale Bremswirkung sollte die Bremsscheibe parallel zu den Bremsbelägen ausgerichtet sein, so dass sie während eines Bremsvorganges ganzflächig aufliegen.

Da jedoch das Drehgestell (oder der Rahmen) typischerweise nicht starr mit den Radachsen verbunden ist, sondern bis zu einem gewissen Grad federnd gehalten wird, kann es zu einer relativen Verdrehung zwischen den Bremsbelägen und der Bremsscheibe kommen (z.B. beim Einfedern). Dies kann dazu führen, dass die Bremsbeläge nicht gleichmäßig auf den Bremsscheiben aufliegen. Um trotzdem eine gleichmäßige Flächenpressung auch bei Verdrehungen der Bremsscheibe um die x-Achse (in Längsrichtung) zu gewährleisten, werden beispielsweise drehbare Halterungen genutzt, die die relativen Verdrehungen kompensieren. Beispielsweise werden diese Drehbewegungen durch sogenannte Hängelaschen (drehbare Aufhängungen, die die Bremszangen in vertikaler Richtung halten) in Kombination mit einer drehbaren Aufhängung der Bremszange (z.B. gummielastische Aufhängung) oder durch eine in Längsrichtung drehbare Aufhängung kompensiert (z.B. mittels eines zentralen Bolzens).

Eine konventionelle Bremszangeneinheit ist beispielsweise in US 4,480,722 A offenbart.

Konventionelle Bremszangeneinheiten zeigen jedoch den folgenden Nachteil. Bei den Bremszangeneinheiten für Schienenfahrzeuge sind im nichtbetätigten Zustand der Bremse die Reibbeläge von der Bremsscheibe um das sogenannte Belagspiel abgehoben. Es wird somit gezielt ein Spalt zwischen der Bremsscheibe und den Reibbelägen ausgebildet. Dieses Belagspiel beträgt in der Regel nominell zwischen 2 ... 4 mm je Bremsscheibenseite und wird durch eine Zusatz-Funktion des Bremszylinders erreicht, der dazu einen Verschleißnachsteller aufweist, der die entsprechende Rückbewegung der Bremsbeläge aktiv ausführt.

Jedoch wird diese Rückführung häufig nur ungleichförmig ausgeführt, d.h. verschiedene Teile der Reibbeläge haben ein unterschiedliches Belagspiel. Dies hat folgende Ursache. Um einen Kraftfluss zwischen dem Bremszylinder und den Bremsbelaghaltern zu erreichen, sind im Kraftfluss verschiedene Lagerstellen (z.B. drehbare Bolzenlager) vorgesehen. Um eine dauerhaften Leichtgängigkeit der Scheibenbremse sicherzustellen, sind Spiele in den Lagerstellen vorgesehen. Diese Spiele können nun dazu führen, dass das am Bremszylinder aktiv erzeugte Belagspiel nicht vollständig bis zu den Bremsbelaghaltern weitergeleitet wird. Dadurch kann das Belagspiel zwischen den Reibbelägen und der Bremsscheibe zumindest an Teilen des Reibbelages unvollständig oder gar nicht entstehen - obwohl der Verschleißnachsteller die Funktion "Erzeugen des Belagspiels" ordnungsgemäß ausgeführt hat.

Daher besteht ein Bedarf an einer Bremszangeneinheit, die ein solches fehlendes Belagspiel vermeidet.

Die Bremszangeneinheit nach Anspruch 1 vermeidet das fehlende Belagspiel. Die abhängigen Ansprüche beziehen sich auf vorteilhafte Weiterbildungen der Bremszangeneinheit nach Anspruch 1.

Die Erfindung betrifft eine Bremszangeneinheit für eine Scheibenbremse eines Fahrzeuges, insbesondere eines Schienenfahrzeuges, mit zumindest zwei gegenüberliegenden Bremsbelaghalterungen, zwischen denen eine Bremsscheibe der Scheibenbremse einführbar ist. Die Bremszangeneinheit umfasst eine Zangenhebelarmstruktur, die ausgebildet ist, um beim Betätigen der Scheibenbremse eine Zuspannkraft auf die Bremsbelaghalterungen zu übertragen. Die Bremszangeneinheit umfasst weiter drehbare Aufhängungen, an die die Bremsbelaghalterungen jeweils befestigt sind, und zumindest eine Vorspanneinheit, die ausgebildet ist, um zumindest eine der drehbaren Aufhängungen entgegen der Zuspannkraft vorzuspannen.

Die Bremszangeneinheit gemäß Ausführungsbeispiele der vorliegenden Erfindung vermeidet das eingangs erwähnte fehlende Belagspiel somit durch eine Vorspannung der drehbaren Aufhängungen der Zangenhebelarmstruktur (z.B. der Hängelaschen und/oder der Zangenhebel). Dies wird beispielsweise durch geeignete Federn erreicht. Auf diese Weise führen die oben genannten Spiele in den Lagerstellen nicht zum Verlust des Belagspiels.

Unter dem Begriff "Bremsscheibe" soll jede Scheibe verstanden werden, die an ein zu bremsendes Rad oder eine Achse koppelt, so dass das Rad durch ein Abbremsen der Bremsscheibe gebremst werden kann. Sie kann auch Teil des zu bremsenden Rades sein. Üblicherweise ist die Bremszangeneinheit an einem Fahrzeug derart angeordnet, dass die Zangenhebelarmstruktur sich entlang der x-Achse (Fahrzeuglängsachse) erstreckt. Dies ist jedoch nicht zwingend erforderlich. Unter dem Begriff "Zuspannkraft" ist jede Kraft zu verstehen, die von zwei gegenüberliegenden Bremsbelägen auf die Bremsscheibe ausgeübt wird, um dadurch eine Bremsung des Fahrzeugs zu bewirken. Bei der Bremsung erzeugt die Reibung der Beläge eine zur Bremsscheibe tangential wirkende Umfangskraft, was ein Drehmoment auf der Radachse erzeugt und zur Bremsung des Fahrzeuges führt. Diese Umfangskraft wird von Belägen durch Bremsbelaghalter und durch Hängelaschen zu dem Drehgestell aufgebracht. Im Folgenden soll darunter aber auch die Kraft gemeint sein, die durch einen Krafterzeuger aufgebracht wird, um das Zuspannen zu bewirken - obwohl beide Kräfte in eine andere Richtung wirken können und aufgrund der Hebelwirkung eine andere Stärke aufweisen können. Da jedoch für eine gegebene Bremseinheit zwischen diesen beiden Kräften ein direkter und eindeutiger Zusammenhang besteht, wird nicht immer und überall zwischen diesen Kräften unterschieden. Unter dem Begriff "Zangenhebelarmstruktur" sollen sämtliche mechanische Konstruktionen verstanden werden, die eine Kraftweiterleitung von einem Krafterzeuger/Kraftwandler (z.B. dem Bremszylinder) zu der Bremsbelaghalterung bewirken, und zwar unabhängig davon, ob die Zangenhebelarmstruktur durch einfache Hebelarme gebildet wird oder komplexere mechanische Strukturen umfassen. Die Zangenhebelarmstruktur ist somit nicht zwangsläufig eine Zusammenfügung von verschiedenen Teilen, sondern kann insbesondere auch einteilig ausgebildet sein.

Die Zangenhebelarmstruktur kann insbesondere zumindest zwei drehbar gelagerte Hebelarme definieren. Die Bremszangeneinheit kann außerdem eine zusätzliche Vorspanneinheit aufweisen, die ausgebildet ist, um zumindest einen der drehbaren Hebelarme entgegen der Zuspannkraft vorzuspannen. Die zumindest zwei drehbaren Hebelarme können auf gegenüberliegenden Seiten der Bremsscheibe angeordnet sein. Es ist jedoch ebenfalls möglich, dass die Hebelarme übereinander auf einer Seite der Bremsscheibe angeordnet sind. In diesem Fall ist es von Vorteil, wenn die zusätzliche Vorspanneinheit zumindest an dem vertikal oberen Hebelarm ausgebildet ist. Aufgrund des Eigengewichtes der Bremszangeneinheit und deren Aufhängung neigen die Bremsbelaghalterungen nämlich zum Abkippen des vertikal oberen Bereiches hin zu der Bremsscheibe. Optional können jedoch zusätzliche Vorspanneinheiten an allen Hebelarmen vorhanden sein.

Insbesondere kann die Bremszangeneinheit zwei Vorspanneinheiten und/oder zwei zusätzliche Vorspanneinheiten aufweisen, die ausgebildet sind, um auf beiden Seiten der Bremsscheibe einen möglichst gleichen Spalt zwischen der Bremsscheibe und den Bremsbelaghalterungen zu erreichen. Zum Beispiel kann auf jeder Seite der Bremsscheibe jeweils zumindest eine Vorspanneinheit ausgebildet sein.

Es versteht sich, dass infolge der Kopplung über den Bremskrafterzeuger die Zangenhebelarme auf beiden Seiten der Bremsscheibe miteinander gekoppelt sind, sodass ein einseitiges Abdrücken auf der anderen Seite zu einem unerwünschten Berühren der Belagelement mit der Bremsscheibe kommt. Daher ist es vorteilhaft, wenn eine Balance der Vorspannkräfte auf beiden Seiten der Bremsscheibe erreicht wird, sodass sich möglichst ein gleicher Abstand herausbildet.

Optional ist/sind die Vorspanneinheit und/oder die zusätzliche Vorspanneinheit(en) Federelemente, die in Richtung der Vorspannung eine Federkraft bereitstellen. Die drehbare Aufhängung kann beispielsweise zumindest einen Haltebolzen aufweisen und die Vorspanneinheit kann eine oder mehrere Torsionsfedern umfassen. Beispielsweise kann/können die Torsionsfeder(n) den Haltebolzen zumindest einmal umwickeln und ausgebildet sein, um eine Drehmomentkraft auf die zumindest eine drehbare Aufhängung auszuüben. Ebenso können die drehbaren Hebelarme jeweils um eine Drehachse drehbar gelagert sein und die zusätzliche Vorspanneinheit(en) können zumindest eine Torsionsfeder umfassen, die zumindest eine der Drehachsen zumindest einmal umwickeln und ausgebildet ist/sind, um eine Drehmomentkraft auf den zumindest einen drehbaren Hebelarm auszuüben.

Hierzu können die Vorspanneinheiten jeweils einen Abstützbereich, einen Kraftwirkbereiche und einen Wickelbereich umfassen. Der Abstützbereich stellt eine Abstützung bereit, um eine Gegenkraft für die Federkraft bereitzustellen, der Kraftwirkbereich übt die Kraft auf die drehbar gelagerten Hebelarme oder die beispielhaften Hängelaschen aus, und der Wickelbereich speichert die Drehmomentkraft in Wicklungen um entsprechende Bolzenelemente.

Bei Ausführungsbeispielen ist die drehbare Aufhängung somit eine vertikal hängende Aufhängung für die Bremsbelaghalterungen bzw. für die Zangenhebelarmstruktur, die mittels Torsionsfedern vorgespannt werden kann. Die drehbare Aufhängung ist somit insbesondere um eine horizontale Achse drehbar.

Optional kann die Vorspanneinheit eine Spreizfeder (oder auch mehrere Spreizfedern) umfassen, um zwischen jeweiligen Angriffspunkten eine Vorspannung entgegen der Zuspannkraft auf die beiden gegenüberliegende Bremsbelaghalterungen auszuüben, wobei die Zangenhebelarmstruktur wiederum zwei drehbar gelagerte Hebelarme umfassen, die gegenüberliegende Bremsbelaghalterungen jeweils drehbar halten.

Optional umfassen die Bremsbelaghalterungen jeweils ein Halteelement, um die Spreizfeder an den Angriffspunkten drehbar zu halten. Die Spreizfeder kann sich U-förmig zwischen den Angriffspunkten an den Halteelementen erstrecken, wobei die gegenüberliegenden Bremsbelaghalterungen durch Befestigungselemente um vertikale Drehachsen drehbar an den Hebelarmen gelagert sind die Angriffspunkte und die Befestigungselemente entlang einer Linie liegen. Die zur Kopplung der Spreizfeder an den Bremsbelaghalterung genutzten Halteelemente können beispielsweise angeschraubt oder fest mit den Bremsbelaghalterungen verbunden sein, wobei zur drehbaren Lagerung der Spreizfederschenkel an den Angriffspunkten Zylinderstifte oder Spannhülsen genutzt werden können.

Somit wird es möglich, dass die Spreizfeder die Achsquerbewegungen der Zangenhebelarmstruktur folgen kann. Ebenso können sie Bewegungen infolge des Belagverschleißes und des Scheibenverschleißes ohne Beeinflussung der Spreizfeder aushalten, da die Lagerung nur kleine Drehmomente übertragen kann. Durch die Anordnung der Angriffspunkte der Spreizfederschenkel über der Mitte der Befestigungselemente (d.h. über der Bolzenmitte) erzeugt die Spreizfederkraft kein Drehmoment auf die Belaghalter, was sonst zu einem erhöhten Verschleiß (Schrägverschleiß) der Beläge führen würde. Ein Vorteil dieser schwimmenden Lagerung (d.h. die Spreizfeder ist nur an den zwei Belaghaltern gelagert) der Spreizfeder ist, dass die Spreizkraft auf beiden Seiten der Bremsscheibe (links und rechts) immer gleich ist, da kein dritter Festpunkt im Kraftfluss vorhanden ist. Die erwähnten Torsionsfedern haben fertigungstechnisch bedingt immer einen gewissen Vorspannkraftunterschied und, da die Festpunktschenkel der Torsionsfeder sich an den Drehgestellrahmen bzw. an der Zugstange 150 abstützen, erzeugen sie unterschiedliche Vorspannkräfte für den linken/rechten Belaghalter. Dadurch kann zwar das Gesamtbelagspiel weiterhin vorhanden sein, es wird aber asymmetrisch zwischen der linken und rechten Seite verteilt. Die erwähnte schwimmend gelagerte Spreizfeder erzeugt jedoch immer eine gleiche Vorspannkraft, sodass der linke bzw. rechte Belaghalter nicht asymmetrisch auf eine Seite hingedrückt werden.

Optional weisen die Halteelemente jeweils eine spaltförmige Führung für die Spreizfeder auf und die Halteelemente umfassen Gleitelemente an zumindest einem Kontaktbereich zwischen den Halteelementen und der Spreizfeder, um einen Verschleiß der Spreizfeder zu verringern (z. B. durch eine Verringerung der Reibung). Die spaltförmige Führung stellt beispielsweise einen langen parallelen Führungsbereich dar, in dem ein Spreizfederschenkel (bzw. ein abgeflachter Abschnitt der Spreizfeder) mit einem kleinen Spiel geführt werden kann. Damit wird eine Verdrehung in vertikaler Richtung weitestgehend verhindert, um somit vertikale Massenkräfte der Spreizfeder aufnehmen zu können, und zwar derart, dass die Abstützkräfte an den Berührungspunkten zwischen dem Halter und der Spreizfeder klein sind und somit wenig Verschleiß an den Berührungspunkten verursacht wird. Auf diese Weise werden die Zylinderstifte, mit denen die Spreizfeder an den Angriffspunkten an den Halteelementen befestigt wird, entlastet.

Optional sind Polsterelemente vorgesehen, die die Spreizfeder abschnittsweise zumindest teilweise umschließen, um eine zuverlässige schwimmende Halterung der Spreizfeder zwischen den Angriffspunkten zu ermöglichen. Diese Polsterelemente verhindern zum Beispiel eine Vereisung oder Schmutzablagerungen an der Spreizfeder, die zu einer deutlichen Erhöhung der Massenkräfte und somit zu einem größeren Verschleiß an den Halterung-Spreizfeder Kontaktflächen führen könnten. Außerdem bieten die zum Beispiel schwammartigen Polsterelemente eine sehr gute Schwingungsdämpfung, sodass sie eine Resonanz der Spreizfeder im Eigenfrequenzbereich verhindern können. Dazu können die Polsterelemente Gummischwamm (Moosgummi oder Neoprengummi) oder eine sehr elastische Kunststoffmaterial aufweisen. Unter einer schwimmenden Halterung soll eine Halterung verstanden werden, die Bewegungen der Spreizfeder in allen drei Richtungen ermöglicht, so dass die Spreizfeder nur an den Angriffspunkten fixiert ist, d.h. nicht an einem dritten Punkt, der z.B. Teil des Drehgestells oder der Zugstange sein könnte.

Optional ist/sind die Vorspanneinheit und/oder die zusätzliche(n) Vorspanneinheit(en) ausgebildet, um alle im Kraftfluß der Zuspannkraft liegenden Lager entgegen oder in der Zuspannrichtung vorzuspannen. Damit werden alle Lagerspiele in Zuspannrichtung oder entgegen dazu aufgebraucht. Als Resultat ergibt sich zwischen der Bremsscheibe und dem zumindest einen Reibbelag auf beiden Seiten ein gewünschtes Mindestbelagspiel. Das Mindestbelagspiel kann jeder beliebige vorbestimmte Wert sein (z.B. 2 mm oder 3 mm oder 4 mm oder 5 mm betragen). Ein Vorteil von Ausführungsbeispiele der vorliegenden Erfindung besteht darin, dass dieses Mindestbelagspiel überall sichergestellt werden kann.

Das Mindestbelagspiel kann auch 1 mm oder 1,5 mm oder 2 mm oder 2,5 mm betragen. Infolge der Achsquerbewegungen des Radsatzes (z.B. wegen eines normalen Schienenlaufs oder wegen eines Schienenfehlers oder der Durchfahrt an Weichen) werden die Beläge häufig links und rechts näher an die Bremsscheibe kommen, bzw. es kann zu Berührungen der Bremsscheibe kommen (da die Achsquerbewegungen manchmal grösser sind als das Belagspiel). Wegen des durch die Spreizung der Belaghalter entstehendes großes Gesamtbelagspiel, werden diese Bremsscheibe-Bremsbelag Berührungen seltener bzw. mit kleinerer Anstoßgeschwindigkeit auftreten, wodurch der Verschleiß der Beläge und der Scheibe kleiner wird.

Die Bremszangeneinheit kann weiter einen Bremskrafterzeuger (z.B. Bremszylinder) aufweisen, der ausgebildet ist, um die Zuspannkraft auf die Zangenhebelarmstruktur zu bewirken. Der Bremskrafterzeuger kann außerdem ein Nachstellelement aufweisen, das ausgebildet ist, um eine Länge des Bremskrafterzeugers einerseits zu vergrößern, wenn beim Anlegen und/oder Lösen der Bremse ein Belagverschleiß vorliegt oder erkannt wird (z.B. durch eine entsprechende Sensorik), und andererseits die Länge des Bremskrafterzeugers konstant zu halten, wenn die Bremse gelöst ist.

Die Bremszangeneinheit kann außerdem eine Haltestruktur umfassen, die ausgebildet ist, um die Bremszangeneinheit an einem Drehgestell oder einem Rahmen des Fahrzeuges zu befestigen und dort drehbar zu lagern (z.B. um die Fahrzeuglängsachse).

Die vorliegende Erfindung bezieht sich auch auf eine Scheibenbremse mit einer zuvor beschriebenen Bremszangeneinheit. Außerdem bezieht sich die vorliegende Erfindung auf ein Fahrzeug und insbesondere auf ein Schienenfahrzeug mit einer zuvor beschriebenen Bremszangeneinheit bzw. Scheibenbremse.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
Fig. 1 zeigt eine Bremszangeneinheit gemäß einem Ausführungsbeispiel der vorliegenden Erfindung.
Fig. 2 zeigt die Bremszangeneinheit gemäß einem weiteren Ausführungsbeispiel.
Fig. 3 zeigt eine Detailansicht für eine Vorspanneinheit an einem der Bremshebelarme gemäß einem Ausführungsbeispiel.
Fig. 4 zeigt eine Raumansicht auf die Bremszangeneinheit mit einer beidseitig ausgebildeten Zangenhebelarmstruktur gemäß einem Ausführungsbeispiel der vorliegenden Erfindung.
Fig. 5 zeigt ein weiteres Ausführungsbeispiel der vorliegenden Erfindung, bei dem eine Spreizfeder genutzt wird, um die Bremsbelaghalterungen nach außen zu drücken. Die U-förmige Spreizfeder ist im vorgespannten Zustand dargestellt (im ungespannten Zustand würden die Federschenkel weiter auseinander stehen).
Fig. 6A, 6B zeigen weitere Details des Ausführungsbeispiels aus der Fig. 5.
Fig. 7 zeigt eine beispielhafte Spreizfeder, die gemäß Ausführungsbeispielen genutzt werden kann. Die U-förmige Spreizfeder ist im vorgespannten Zustand dargestellt (im ungespannten Zustand würden die Federschenkel noch weiter auseinander stehen).
Fig. 8 zeigt eine weitere Bremszangeneinheit gemäß weiterer Ausführungsbeispiele.

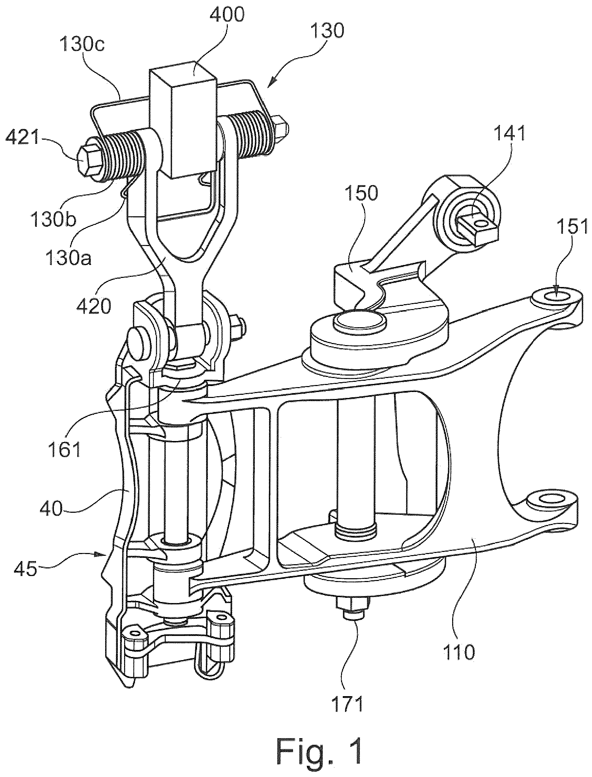

**Fig. 1** zeigt eine Bremszangeneinheit gemäß einem Ausführungsbeispiel der vorliegenden Erfindung. Die Bremszangeneinheit ist für eine Scheibenbremse eines Fahrzeuges, insbesondere eines Schienenfahrzeuges, geeignet. Die Scheibenbremse umfasst zumindest zwei gegenüberliegenden Bremsbelaghalterungen 40 (nur eine davon ist gezeigt), zwischen denen eine Bremsscheibe (nicht gezeigt) der Scheibenbremse einführbar ist. Die Bremszangeneinheit umfasst eine Zangenhebelarmstruktur 110, die ausgebildet ist, um beim Betätigen der Scheibenbremse eine Zuspannkraft auf die Bremsbelaghalterung 40 zu übertragen. Fig. 1 zeigt nur die eine Seite der Hebelarmstruktur. Die Zuspannkraft wirkt auf die Bremsbelaghalterung 40 in die Zeichenebene hinein. Außerdem umfasst die Bremszangeneinheit eine drehbare Aufhängung 420, an die die Bremsbelaghalterung 40 befestigt ist, und zumindest eine Vorspanneinheit 130, die ausgebildet ist, um die drehbare Aufhängungen 420 entgegen der Zuspannkraft vorzuspannen (d.h. aus der Zeichenebene heraus).

Die in der Fig. 1 beispielhaft gezeigte Aufhängung 420 ist mit einem Bolzen 421 an einer Halterung 400 (z.B. Halterung an dem Drehgestell oder einem Rahmen des Fahrzeuges) oder direkt an dem Drehgestell befestigt. Die Vorspanneinheit 130 (oder Vorspannelement) ist als ein (Torsions-) Federelement ausgebildet, welches durch die Halterung 400 durch eine Abstützbereich 130c abgestützt wird und eine Federkraft an den Kraftwirkbereich 130a auf die drehbare Aufhängung 420 ausübt. Außerdem ist ein Wickelbereich 130b ausgebildet, indem sich das Federelement mehrfach um den Bolzen 421 wickelt, um die Federkraft als Drehmoment zu speichern.

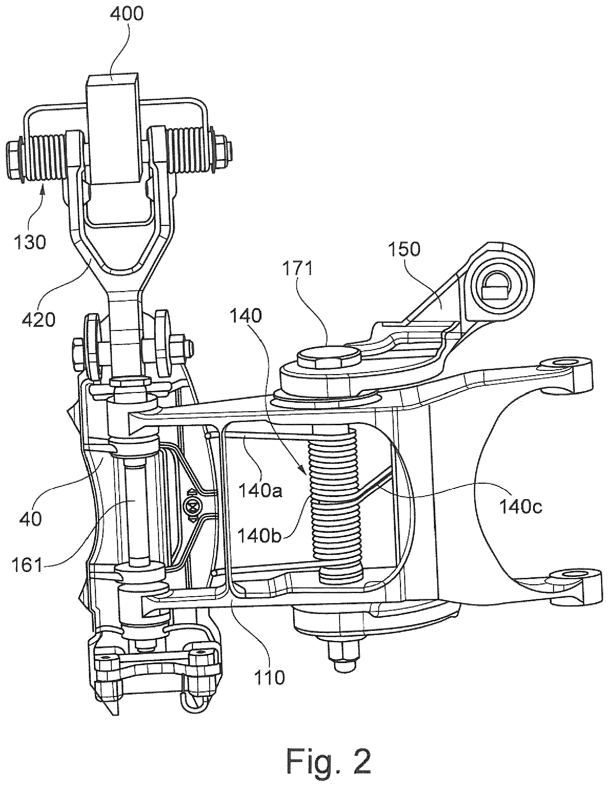

Weiterhin ist der Belagträger 40 gezeigt, auf welchem ein Bremsbelag 45 montierbar ist (in der Fig. 2 auf die Rückseite des Belagträgers 40). Der Belagträger 40 ist über eine Bolzenverbindung 422 mit der Aufhängung 420 verbunden und hängt in installiertem Zustand vertikal unterhalb der Aufhängung 420. Die Zangenhebelarmstruktur 110 ist drehbar um die Drehachse 171 (eine weitere Bolzenverbindung) gelagert. Auf der einen Seite trägt die Zangenhebelarmstruktur 110 den Belagträger 40 über ein Befestigungselement 161 (z.B. eine Bolzenverbindung) und auf der zur Drehachse 171 gegenüberliegenden Seite wird eine drehbare Halterung über ein weiteres Befestigungselement 151 (z.B. eine Bolzenverbindung, nicht gezeigt) zu dem Bremszylinder (nicht gezeigt) hergestellt.

Eine weitere Halterung 150 hält die Bremszangeneinheit beispielsweise über ein Befestigungselement 141 (z.B. Bolzenelement) um die Fahrzeuglängsachse drehbar an dem beispielhaften Drehgestell oder einen Rahmen des Fahrzeuges. Das Befestigungselement 141 kann beispielsweise so angeordnet sein, dass der Massenschwerpunkt der Bremszangeneinheit zwischen dem Befestigungselement 141 und der Aufhängung 420 liegt, so dass in einem Ruhezustand die Bremszangeneinheit eine Zugkraft auf die Aufhängung 420 ausübt.

**Fig. 2** zeigt weiteres Ausführungsbeispiel für die Bremszangeneinheit. Im Vergleich zur Fig. 1 ist bei diesem Ausführungsbeispiel eine zusätzliche Vorspanneinheit 140 (oder Vorspannelement) entlang einer Drehhalterung 171 (die z.B. einen entsprechenden Bolzen umfasst) ausgebildet. Die Aufhängung 420 ist wie in der Fig. 1 an der Halterung 400 aufgehangen und über die Vorspanneinheit 130 vorgespannt (in Richtung aus der Zeichenebene heraus). In die gleiche Richtung wirkt die zusätzlich Vorspanneinheit 140, die eine Vorspannkraft auf das Befestigungselement 161 und somit ebenfalls auf Bremsbelaghalterung 40 ausübt.

Beispielhaft ist die zusätzliche Vorspanneinheit 140 als ein Federelement ausgebildet, das einen Kraftwirkbereich 140a, einen Wickelbereich 140b und einen Abstützbereiche 140c umfasst. Der Kraftwirkbereich 140a koppelt wiederum an die Zangenhebelarmstruktur 110, um dort die Federkraft auszuüben. Der Wickelbereich 140b ist in Form von Wicklungen ausgebildet, die sich um die beispielhafte Bolzenverbindung 171 herum erstrecken und die Federkraft als eine Torsionskraft speichern. Der Abstützbereich 140c ist wiederum ausgebildet, um eine Gegenkraft bereitzustellen und stützt sich beispielsweise an der drehbaren Halterung 150 ab. Die drehbare Halterung 150 hält die Bremszangeneinheit wiederum über ein beispielhaftes Bolzenelement 141 beispielsweise an dem Drehgestell des Fahrzeuges. Alle weiteren Elemente sind in der gleichen Weise ausgebildet wie in der Fig. 1, sodass eine wiederholte Beschreibung nicht erforderlich ist.

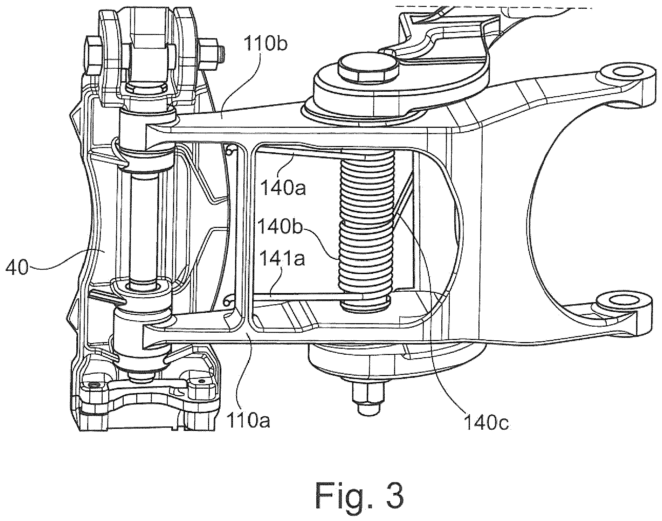

**Fig. 3** zeigt eine Detailansicht der Vorspanneinheit 140, die die Vorspannkraft für die Zangenhebelarmstruktur 110 bereitstellt. Die Zangenhebelarmstruktur 110 weist in dem gezeigten Ausführungsbeispiel zwei drehbar gelagerte Hebelarme 110a, 110b auf, die übereinander angeordnet und über ein Querelement 110c miteinander verbunden sind. Es versteht sich, dass auf der anderen Seite der Scheibenbremse weitere Hebelarme ausgebildet sein können, die spiegelsymmetrisch zu den gezeigten Zangenhebelarmstruktur 110 sein können.

Die (zusätzliche) Vorspanneinheit 140 umfasst beispielhaft einen ersten Kraftwirkbereich 140a und einen zweiten Kraftwirkbereich 141a, die an die beiden Hebelarme 110a, 110b koppeln. Ebenso umfasst der Wickelbereich 140b zwei Bereiche, die jeweils mit dem Abstützbereich 140c verbunden sind und die jeweilige Vorspannkraft für die Hebelarme 110a, 110b bereitstellen.

Dies muss jedoch nicht zwingend so sein. Aufgrund des Eigengewichtes der Bremszangeneinheit und deren Aufhängung neigen die Bremsbelaghalterungen 40 zum Abkippen des vertikal oberen Bereiches hin zu der Bremsscheibe. Daher wird bei Ausführungsbeispielen insbesondere der vertikal obere Bereich der Bremsbelaghalterung 40 (nach einem Einbau im Fahrzeug), aber nicht zwingend nur der, vorgespannt. Hierzu dient sowohl die Vorspanneinheit 130 als auch die zusätzliche Vorspanneinheit 140. Daher kann bei weiteren Ausführungsbeispielen auch der zweite Kraftwirkbereich 141a nicht ausgebildet sein. Es ist ebenfalls möglich, dass nur der zweite Kraftwirkbereich 141a ausgebildet ist, beispielsweise wenn die Vorspanneinheit 130 ausreichend stark ausgebildet ist. Den Kraftwirkbereich 140a braucht man dann nicht zwingend.

Alle gezeigten Verbindungselemente weisen einen Spielraum auf. Dieser Spielraum führt zu dem oben genannten Problem, dass in einem Ruhezustand oder in einem nichtbetätigten Zustand der Bremse die Belagträger 40 und somit ebenfalls die Belagelemente nicht parallel zu der Bremsscheibe angeordnet sind. Insbesondere durch die Gewichtsverteilung kommt dazu, dass die vertikal oberen Bereiche wie gesagt dichter an der Bremsscheibe anliegen können und eventuell die Bremsscheibe berühren, während sie in einem unteren Bereich weiter von der Bremsscheibe entfernt sind. Es hat sich aber gezeigt, dass es vorteilhaft ist, wenn die Bremsscheibe im Ruhezustand möglichst parallel zu den Bremsbelägen liegt. Diese Lage wird durch die Vorspanneinheiten 130, 140 erreicht, da die Vorspanneinheiten 130, 140 dazu führen, dass die Spielräume an den Verbindungselementen aufgebraucht werden und zu einem Spalt zwischen der Bremsscheibe und den Bremsbelägen führt. Vorteilhafterweise drücken die Vorspanneinheiten 130, 140 insbesondere die oberen Bereiche (d.h. in der Nähe der Aufhängung 420) von der Bremsscheibe weg, sodass sie nicht dichter an der Bremsscheibe anliegen als die unteren Bereiche.

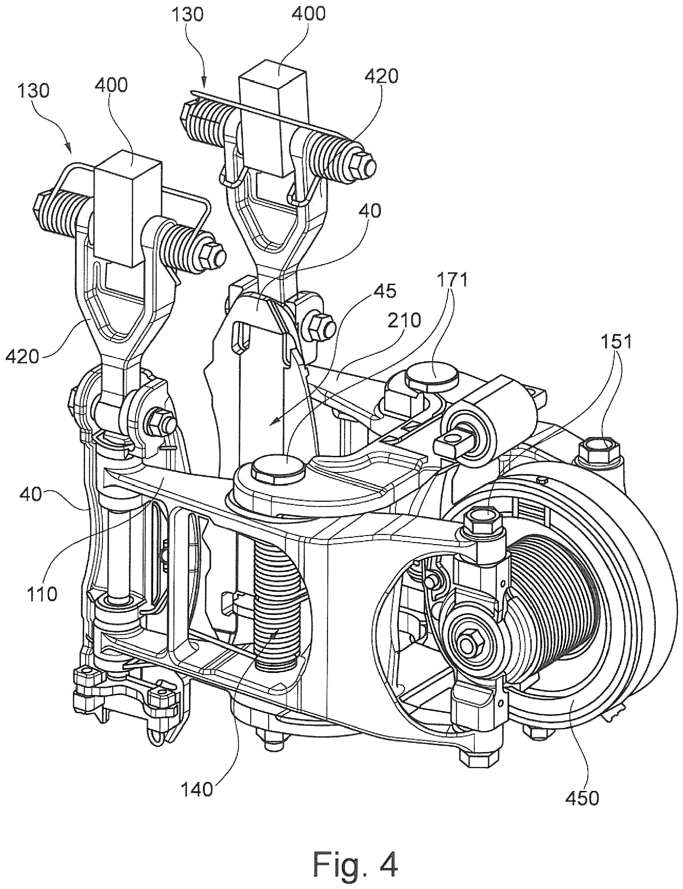

**Fig. 4** zeigt eine Raumansicht auf die Bremszangeneinheit mit einer beidseitig ausgebildeter Zangenhebelarmstruktur 110, 120 gemäß einem Ausführungsbeispiel der vorliegenden Erfindung. Die Zangenhebelarmstruktur 110, 120 umfasst einen ersten Hebelarm 110 und einen zweiten Hebelarm 120, zwischen den eine Bremsscheibe einführbar ist (nicht gezeigt). Die Zangenhebelarmstruktur 110, 120 kann beispielsweise spiegelsymmetrisch zur Bremsscheibe gebildet sein, sodass jeder Hebelarm 110, 120 um die Drehachse 171 drehbar gelagert ist und auf der einen Seite über die Verbindungselemente 151 an den Bremskrafterzeuger 450 koppelt. Auf der anderen Seite koppelt jeder Hebelarm 110, 120 an einen Belagträger 40, auf welchen Reibbeläge an der Position 45 angebracht werden können. Jeder Belagträger 40 ist über eine drehbare Aufhängung 420 an einer Drehgestellhalterung 400 befestigt.

In dem gezeigten Ausführungsbeispiel ist jeder Aufhängung 420 durch das Vorspanneinheit 130 wie zuvor beschrieben vorgespannt und/oder jeder Hebelarm 110, 120 ist durch die zusätzliche Vorspanneinheit 140 wie zuvor beschrieben vorgespannt. Bei dem Einstellen der Vorspannung ist es von Vorteil, wenn die Vorspannkräfte derart wirken, dass die Bremsscheibe möglichst mittig zwischen den Bremsbelaghalterungen 40 angeordnet ist (d.h. sich eine Balance ergibt).

Alle weiteren Elemente können in der gleichen Weise ausgebildet werden, wie es in den Fig. 1 bis 3 beschrieben wurde, sodass eine erneute Beschreibung hier nicht erforderlich ist.

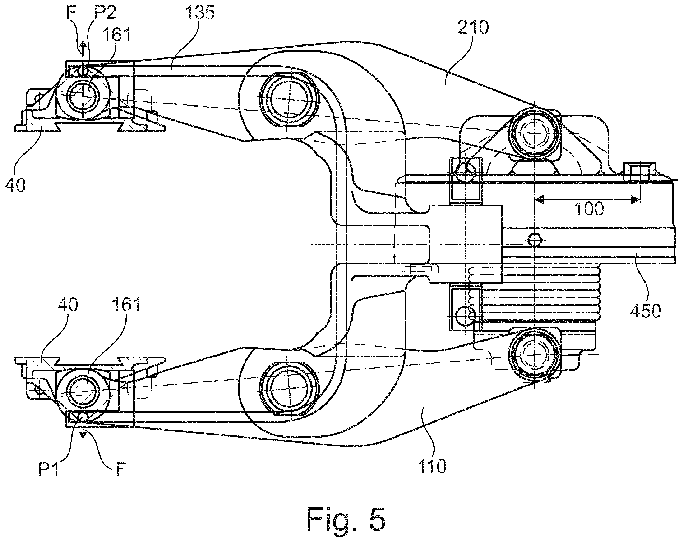

Die Fig. 5 zeigt ein weiteres Ausführungsbeispiel der vorliegenden Erfindung, bei dem eine Spreizfeder 135 genutzt wird, um die Bremsbelaghalterungen 40 nach außen zu drücken. Die Spreizfeder 135 weist dafür ein U-förmiges Profil auf, welches sich um die Bremsscheibe (in der Fig. 5 nicht gezeigt) herum erstreckt und an seinen beiden Endpunkten P1, P2 jeweils eine Bremsbelaghalterung 40 in Eingriff nimmt. Die Endpunkte P1, P2 der Spreizfeder 135 sind daher Angriffspunkte P1, P2 der Spreizkraft F. Vorteilhafterweise sind sie derart angeordnet, dass die Verbindungslinie zwischen den Angriffspunkten P1, P2 durch die oder nahe zu den Mittelpunkten der Befestigungselemente 161 für die Bremsbelaghalterung (d.h. die vertikalen Drehachsen der Belaghalterungen 40) verläuft. Daher bewirkt die Spreizfeder 135, dass die Zangenhebelarmstrukturen 110, 210 in Richtung der Spreizkraft F auseinandergedrückt werden, und zwar entgegen der Bremskraft, die durch den Bremskrafterzeuger 54 aufgebracht wird, und idealerweise ohne dass ein Drehmoment auf die Bremsbelaghalterungen 40 ausgeübt wird. Es versteht sich, dass die Spreizkraft F und die entsprechende Gegenkraft F gleich groß sind, aber an den Angriffspunkten P1, P2 in entgegengesetzten Richtungen wirken.

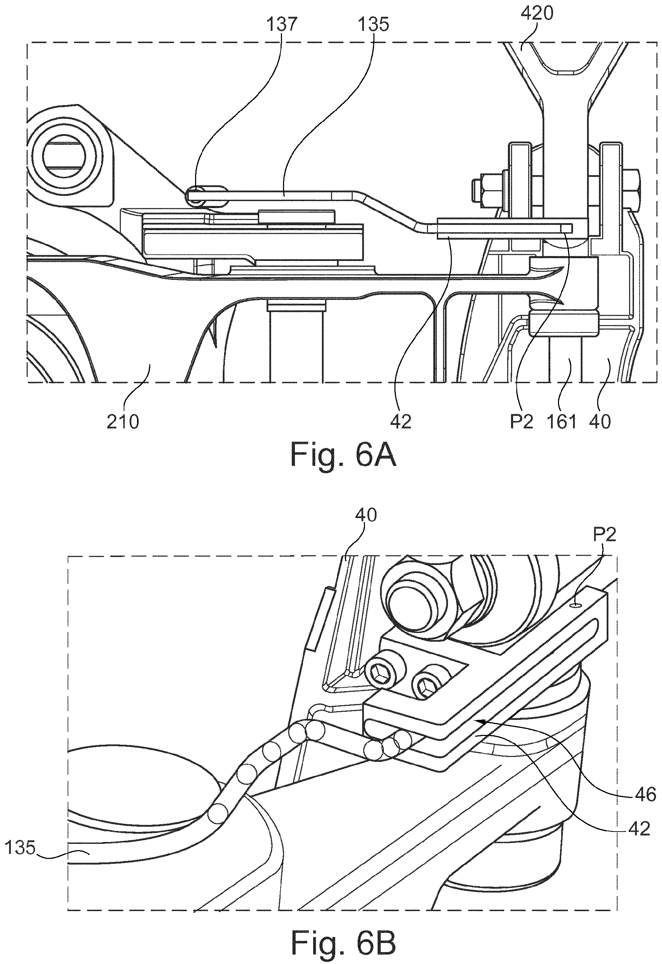

Die Fig. 6A, 6B zeigen weitere Details der Anordnung der Spreizfeder 135 in der Bremszangeneinheit.

Die Fig. 6A zeigt eine Seitenansicht auf die Zangenhebelarmstruktur 210, die die Bremsbelaghalterung 40 hält und durch die Hängelaschenstruktur 420 in vertikaler Richtung hängend mit dem Drehgestell oder dem Fahrzeugrahmen verbunden ist. Wie es in der Fig. 6A dargestellt ist, kann die Spreizfeder 135 schwimmend oberhalb der Zangenhebelarmstruktur 210 angeordnet sein und mit ihren Endabschnitten (Endpunkte der Schenkel) in ein Halteelement 42 eingreifen, das mit der Bremsbelaghalterung 40 verbunden ist. Die Spreizfeder 135 ist an den Angriffspunkten P1, P2 drehbar mit den Halteelementen 42 verbunden, und zwar derart, dass die Spreizkraft F der Spreizfeder 135 möglichst mittig auf die Befestigungselemente 161 wirkt, sodass es zu keiner Verdrehung der Bremsbelaghalterung 40 durch die Federkraft der Spreizfeder 135 kommt.

Außerdem sind in den gezeigten Ausführungsbeispielen zwischen den beiden Schenkeln der Spreizfeder 135 Polsterelemente 137 als Schutz zumindest teilweise um die Spreizfeder 135 herum angeordnet. Die Polsterelemente 137 können ein Gummi oder Schaumstoff aufweisen, um größere Eis- oder Schmutzablagerungen zu verhindern und somit eine Vergrößerung der Massenkräfte zu verhindern. Außerdem bieten die Polsterelemente 137 eine gute Schwingungsdämpfung, wodurch ebenfalls die durch Vibrationen erzeugte Massenkräfte verringert werden.

Die Fig. 6B zeigt eine Perspektivansicht von schräg oben, die weitere Details des Halteelementes 42 zeigt. In dem gezeigten Ausführungsbeispiel ist das Halteelement 42 an der Bremsbelaghalterung 40 angeschraubt. Bei weiteren Ausführungsbeispielen ist das Halteelement 42 Teil der Bremsbelaghalterung 40 oder damit unlösbar oder lösbar verbunden (z. B. angeschweißt, angegossen oder angeschraubt). Das Halteelement 42 umfasst einen Spalt 46 (ein paralleler Führungsbereich), in welchem die Spreizfeder 135 einführbar ist und dort um die Angriffspunkte P1, P2 herum drehbar gelagert wird. Beispielsweise können die Angriffspunkte P1, P2 Löcher in der Spreizfeder 135 darstellen, sodass über Stiftelemente oder Bolzen oder Spannhülsen eine drehbare Halterung der Spreizfeder 135 an dem Halteelement 42 erreicht wird und die Spreizkraft an den Angriffspunkten P1, P2 wirkt.

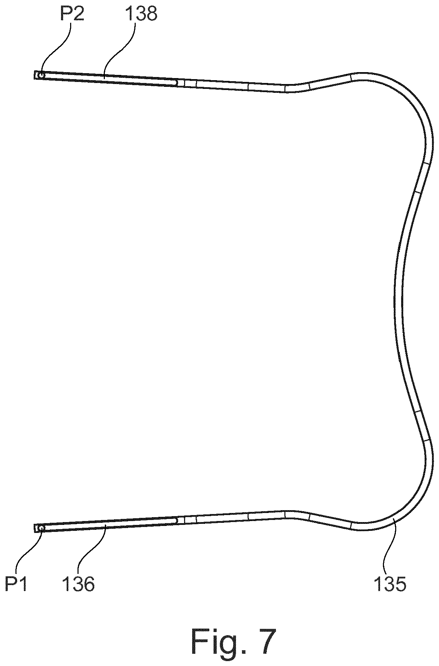

Die Fig. 7 ist eine Detaildarstellung der Spreizfeder 135, die beispielhaft ein U-förmiges Profil aufweist, welches sich zwischen den beiden Angriffspunkten in P1 und P2 erstreckt. Die Angriffspunkte P1, P2 sind beispielhaft Durchgangsöffnungen in der Spreizfeder 135, durch die jeweils ein Stiftelement einführbar ist, um die Spreizfeder 135 drehbar um die Angriffspunkte P1, P2 herum an den Halteelementen 42 zu halten. Außerdem weist die Spreizfeder 135 abgeflachte Schenkelabschnitten 136, 138 auf, die um die Angriffspunkte P1, P2 herum ausgebildet sind. Die abgeflachte Schenkelabschnitten 136, 138 werden in die Spalten 46 der Halteelemente 42 drehbar gehalten. Ein Vorteil der abgeflachten Schenkelabschnitte 136, 138 besteht darin, dass sie eine Verdrehung der Spreizfeder 135 entlang einer horizontalen Achse effektiv verhindern und somit die Stiftelemente schützen.

Optional weisen die Halteelementen 42 zusätzliche Gleitelemente auf (in den Figuren nicht gezeigt), die beispielsweise ein Kunststoffmaterial (z.B. Polyamid) umfassen können, sodass eine schonende Lagerung der Spreizfeder 135 (bei den Drehungen und/oder vertikalen Bewegungen) erreicht wird. Ansonsten könnte es z.B. an den Punkten, wo die Spreizfeder 135 den Spalt 46 verlässt, aufgrund der wirkenden Kräfte zu einem erhöhten Verschleiß infolge der Reibung der Spreizfeder 135 kommen. Die Gleitelemente sollen insbesondere die Reibung verringern.

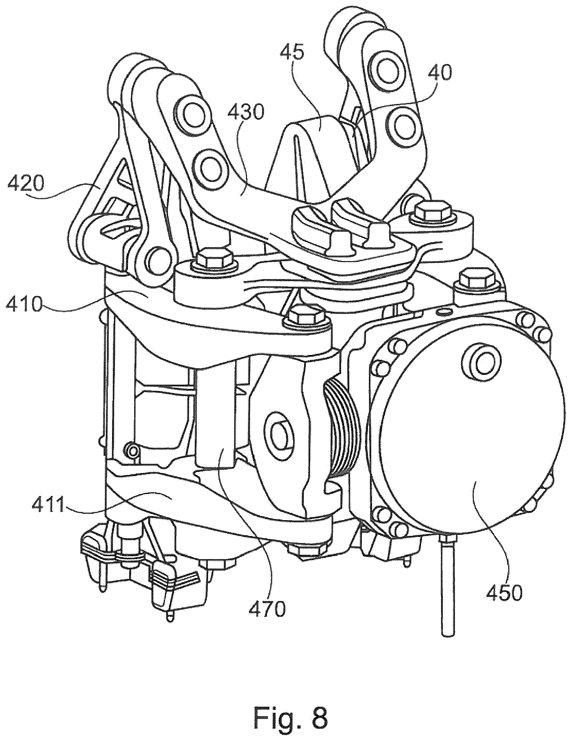

**Fig. 8** zeigt eine weitere Ausführungsform für die Bremszangeneinheit, bei der wiederum Bremsbeläge 45 auf einem Bremsbelaghalter 40 befestigt sind. Die Bremsbelaghalter 40 sind über Halterungen 410, 411, 420, 430 mit einem Bremskrafterzeuger 450 verbunden. Die Bremskrafterzeuger 450 umfasst beispielsweise ein Nachstellelement, das ausgebildet ist, um den Bremskrafterzeuger 450 zu veranlassen, die Bremsbeläge 45 in einem nichtaktivierten Zustand von der Bremsscheibe (nicht in der Fig. 5 gezeigt) wegzuführen. Dieses oder weitere Nachstellelemente führen ebenfalls eine Kompensation bei Verschleiß durch. Beispielsweise können sie die Länge des Bremskrafterzeugers 450 einerseits vergrößern, wenn beim Anlegen und/oder Lösen der Bremse ein Belagverschleiß erkannt wird, und andererseits die Länge des Bremskrafterzeugers konstant halten, wenn die Bremse gelöst ist. Diese Funktion kann ebenfalls in dem Bremskrafterzeuger, der in den Ausführungsbeispielen der Fig. 1-4 genutzt wird, umgesetzt sein.

Beim Betätigen der Bremse übt der Bremskrafterzeuger 450 eine Bremskraft über die Halterungen 410, 411, 420, 430 auf die Bremsbeläge 45 aus. Der Bremsbelaghalter 440 wird wieder über zwei Zangenhebel 410, 411 und eine Hängelaschenstruktur 420, 430 gehalten. Die Zangenhebel 410, 411 übertragen beim Betätigen der Bremse den Zangendruck auf die Bremsbeläge 45 und die Hängelaschenstruktur 420, 430 ist ausgebildet, um ein relatives Verdrehen der Bremsbeläge 45 zu der Bremsscheibe zu ermöglichen. Die Hängelaschen umfassen eine Halterung 430 und einen drehbaren Abschnitt 420, die bei einem Verkippen der Bremszangeneinheit relativ zu der Scheibenbremse eine parallele Ausrichtung der Bremsbeläge 45 durch ein Verdrehen der Bremsbelaghalter 440 ermöglichen (d.h. die Verdrehungen werden kompensiert). Außerdem weist die Bremszangenhalterung aus der Fig. 5 einen ersten Bremszangenarm 410 und einen zweiten Bremszangenarm 411 auf, die die Bremskraft übertragen.

Wie auch bei den Ausführungsbeispielen der Fig. 1 bis 4 ist auch in der Bremszangeneinheit der Fig. 5 eine Vorspanneinheit 130 und/oder eine zusätzliche Vorspanneinheit 140 vorhanden. Die Vorspanneinheit 130 ist bei diesem Ausführungsbeispiel in der Verbindung zwischen dem drehbaren Abschnitt 420 und der Halterung 430 integriert und daher nicht zu sehen. Sie bewirkt aber eine gleiche Drehmomentkraft wie die Vorspanneinheit aus der Fig. 1, d.h. der drehbare Abschnitt 420 wird von der Bremsscheibe wegedrückt (nach vorne links in der Fig. 4). In ähnlicher Weise kann optional die zusätzliche Vorspanneinheit 140 in der Verbindung zwischen der Drehverbindung 470 zwischen den Zangenhebel 410, 411 und der Befestigung am beispielhaften Drehgestell integriert sein und ist in der Fig. 5 nicht sichtbar. Auch sie wirkt entgegen der Zuspannkraft des Bremskrafterzeugers 450.

Die Vorspanneinheit 130 und/oder die zusätzliche Vorspanneinheit 140 können wieder als Federelemente ausgebildet sein (z.B. als Torsionsfedern).

### BEZUGSZEICHENLISTE

- 40: Bremsbelaghalterungen
- 42: Halteelement für eine Spreizfeder
- 45: Bremsbelag
- 46: Spalt in dem Halteelement
- 110,210: Zangenhebelarmstruktur
- 130, 140: Vorspanneinheiten
- 130a, 130b, 130c, 140a, 140b, 140c: Bereiche der als Torsionsfedern ausgebildeten Vorspanneinheiten
- 135: Spreizfeder
- 137: Polsterelemente
- 136,138: abgeflachte Spreizfederschenkel
- 150: Halterung zum Drehgestell
- 151, 152: Befestigungselemente zum Bremskrafterzeuger
- 161, 422: Befestigungselemente zur Bremsbelaghalterung
- 171,172: Drehachse
- 400: Halterung am Rahmen oder Drehgestell
- 410, 411: Zangenhebel
- 420,430: Hängelaschenstruktur
- 450: Bremskrafterzeuger
- 470: Drehachse
- F: Spreizkraft bzw. deren Gegenkraft
- P1, P2: Angriffspunkte der Spreizkraft

## Patentansprüche

1. Bremszangeneinheit für eine Scheibenbremse eines Fahrzeuges, insbesondere eines Schienenfahrzeuges, mit zumindest zwei gegenüberliegenden Bremsbelaghalterungen (40), zwischen denen eine Bremsscheibe der Scheibenbremse einführbar ist,
**gekennzeichnet durch**
- eine Zangenhebelarmstruktur (110, 210), die ausgebildet ist, um beim Betätigen der Scheibenbremse eine Zuspannkraft auf die Bremsbelaghalterungen (40) zu übertragen;
- drehbare Aufhängungen (420), an die die Bremsbelaghalterungen (40) jeweils befestigt sind; und
- zumindest eine Vorspanneinheit (130), die ausgebildet ist, um zumindest eine der drehbaren Aufhängungen (420) entgegen der Zuspannkraft vorzuspannen.

2. Bremszangeneinheit nach Anspruch 1,
**dadurch gekennzeichnet, dass**
die Zangenhebelarmstruktur (110, 210) zwei drehbar gelagerte Hebelarme (110, 210) definiert und die Bremszangeneinheit weiter eine zusätzliche Vorspanneinheit (140) aufweist, die ausgebildet ist, um zumindest einen der drehbaren Hebelarme (110, 210) entgegen der Zuspannkraft vorzuspannen.

3. Bremszangeneinheit nach Anspruch 1 oder Anspruch 2,
**dadurch gekennzeichnet, dass**
die zumindest eine Vorspanneinheit (130) zwei Vorspanneinheiten (130) aufweist und/oder zwei zusätzliche Vorspanneinheiten (140) ausgebildet sind, um auf beiden Seiten der Bremsscheibe einen möglichst gleichen Spalt zwischen der Bremsscheibe und den Bremsbelaghalterungen zu erreichen.

4. Bremszangeneinheit nach einem der vorhergehenden Ansprüche,
**dadurch gekennzeichnet, dass**
die Vorspanneinheit (130) und/oder die zusätzliche Vorspanneinheit (140) Federelemente sind, die in Richtung der Vorspannung eine Federkraft bereitstellen.

5. Bremszangeneinheit nach einem der vorhergehenden Ansprüche,
**dadurch gekennzeichnet, dass**
die drehbare Aufhängung (420) einen Haltebolzen (421) aufweist und die Vorspanneinheit (130) eine Torsionsfeder umfasst, die den Haltebolzen (421) zumindest einmal umwickelt und ausgebildet ist, um eine Drehmomentkraft auf die zumindest eine drehbare Aufhängung (420) auszuüben.

6. Bremszangeneinheit nach einem der Ansprüche 2 bis 5,
**dadurch gekennzeichnet, dass**
die drehbaren Hebelarme (110, 210) jeweils um eine Drehachse (171, 172) drehbar gelagert sind und die zusätzliche Vorspanneinheit (140) eine Torsionsfeder umfasst, die eine der Drehachsen (171) zumindest einmal umwickelt und ausgebildet ist, um eine Drehmomentkraft auf den zumindest einen drehbaren Hebelarm (110) auszuüben.

7. Bremszangeneinheit nach einem der Ansprüche 1 bis 6, wobei die Zangenhebelarmstruktur (110, 210) zwei drehbar gelagerte Hebelarme (110, 210) definiert, die gegenüberliegende Bremsbelaghalterungen (40) jeweils drehbar halten,
**dadurch gekennzeichnet, dass**
die Vorspanneinheit (130) zumindest eine Spreizfeder (135) umfasst, um zwischen jeweiligen Angriffspunkten (P1, P2) eine Vorspannung entgegen der Zuspannkraft auf die beiden gegenüberliegende Bremsbelaghalterungen (40) auszuüben.

8. Bremszangeneinheit nach Anspruch 7, wobei die gegenüberliegenden Bremsbelaghalterungen (40) durch Befestigungselemente (161) um vertikale Drehachsen drehbar an den Hebelarmen (110, 210) gelagert sind,
**dadurch gekennzeichnet, dass**
die Bremsbelaghalterungen (40) jeweils ein Halteelement (42) aufweisen, um die Spreizfeder (135) an den Angriffspunkten (P1, P2) drehbar zu halten, und die Spreizfeder (135) sich U-förmig zwischen den Angriffspunkten (P1, P2) an den Halteelementen (42) erstreckt, wobei die Angriffspunkte (P1, P2) und die Befestigungselemente (161) entlang einer Linie liegen.

9. Bremszangeneinheit nach Anspruch 8,
**dadurch gekennzeichnet, dass**
die Halteelemente (42) jeweils eine spaltförmige Führung (46) für die Spreizfeder (135) aufweisen und die Halteelemente (42) zumindest an einen Kontaktbereich zwischen den Halteelementen (42) und der Spreizfeder (135) Gleitelemente aufweisen, um einen Verschleiß der Spreizfeder (135) zu verringern.

10. Bremszangeneinheit nach einem der Ansprüche 7 bis 9,
**gekennzeichnet durch**
Polsterelemente (137), die die Spreizfeder (135) abschnittsweise zumindest teilweise umschließen, um eine zuverlässige schwimmende Halterung der Spreizfeder (135) zwischen den Angriffspunkten (P1, P2) zu ermöglichen.

11. Bremszangeneinheit nach einem der vorhergehenden Ansprüche, wobei die Bremsbelaghalterung (40) zumindest ein Reibbelag umfassen,
**dadurch gekennzeichnet, dass**
die Vorspanneinheit (130) und/oder die zusätzliche Vorspanneinheit (140) ausgebildet ist/sind, um alle im Kraftfluß der Zuspannkraft liegenden Lager entgegen der Zuspannrichtung vorzuspannen.

12. Bremszangeneinheit nach einem der vorhergehenden Ansprüche,
**gekennzeichnet durch**
einen Bremskrafterzeuger (450), der ausgebildet ist, um die Zuspannkraft auf die Zangenhebelarmstruktur (110, 120) zu bewirken, wobei der Bremskrafterzeuger (450) ein Nachstellelement aufweist, das ausgebildet ist, um eine Länge des Bremskrafterzeugers einerseits zu vergrößern, wenn beim Anlegen und/oder Lösen der Scheibenbremse ein Belagverschleiß erkannt wird, und andererseits die Länge des Bremskrafterzeugers konstant zu halten, wenn die Bremse gelöst ist.

13. Bremszangeneinheit nach einem der vorhergehenden Ansprüche,
**gekennzeichnet durch**
eine Haltestruktur (150), die ausgebildet ist, um die Bremszangeneinheit drehbar an einem Drehgestell oder einem Rahmen des Fahrzeuges zu befestigen.

14. Scheibenbremse mit einer Bremszangeneinheit nach einem der vorhergehenden Ansprüche.

15. Fahrzeug, insbesondere Schienenfahrzeug, mit einer Scheibenbremse nach Anspruch 14 oder einer Bremszangeneinheit nach einem der Ansprüche 1 bis 13.

## Claims

1. A brake calliper unit for a disc brake of a vehicle, in particular a rail vehicle, having at least two opposing brake pad holders (40) between which it is possible to introduce a brake disc of the disc brake,
**characterised by**
- a calliper lever arm structure (110, 210) that is designed to transfer an application force to the brake pad holders (40) when the disc brake is actuated;
- rotatable mountings (420) to which the brake pad holders (40) are fastened; and
- at least one pre-tensioning unit (130) that is designed to pre-tension at least one of the rotatable mountings (420) against the application force.

2. A brake calliper unit according to claim 1,
**characterised in that**
the calliper lever arm structure (110, 210) defines two rotatably mounted lever arms (110, 210) and the brake calliper unit further has an additional pre-tensioning unit (140) that is designed to pre-tension at least one of the rotatable lever arms (110. 210) against the application force.

3. A brake calliper unit according to claim 1 or claim 2,
**characterised in that**
the at least one pre-tensioning unt (130) has two pre-tensioning units (130) and/or there are two additional pre-tensioning units (140) in order to achieve the most even gap possible between the brake disc and the brake pad holders on either side of the brake disc.

4. A brake calliper unit according to any one of the preceding claims,
**characterised in that**
the pre-tensioning device (130) and/or the additional pre-tensioning unit (140) are spring elements that provide a spring force in the direction of the pre-tensioning.

5. A brake calliper unit according to any one of the preceding claims,
**characterised in that**
the rotatable mounting (420) has a retaining bolt (421) and the pre-tensioning unit (130) comprises a torsion spring that winds at least once around the retaining bolt (421) and is designed to exert a torque force on the at least one rotatable mounting (420).

6. A brake calliper unit according to any one of claims 2 to 5,
**characterised in that**
the rotatable lever arms (110, 210) are mounted such that they are able to rotate about an axis of rotation (171, 172) and the additional pre-tensioning unit (140) comprises a torsion spring that winds at least once around one of the axes of rotation (171) and is designed to exert a torque force on the at least one rotatable lever arm (110).

7. A brake calliper unit according to any one of claims 1 to 6,
the calliper lever arm structure (110 210) defining two rotatably mounted lever arms (110, 210) that hold opposing brake pad holders (40) such that they are able to rotate,
**characterised in that**
the pre-tensioning unit (130) comprises at least one spreader spring (135) in order to exert a pre-tensioning force against the application force on the two opposing brake pad holders (40) between the application points (P1 and P2).

8. A brake calliper unit according to claim 7,
the opposing brake pad holders (40) being mounted on the lever arms (110, 210) such that they are able to rotate about vertical axes by means of fastening elements (161),
**characterised in that**
the brake pad holders (40) each have a retaining element (42) to hold the spreader spring (135) such that it is able to rotate at the application points (P1, P2) and the spreader spring (135) extends in a U-shape between the application points (P1, P2) on the retaining elements (42), the application points (P1, P2) and the fastening elements (161) lying along a line

9. A brake calliper unit according to claim 8,
**characterised in that**
the retaining elements (42) each have a slot-shaped guide (46) for the spreader spring (153), and the retaining elements (42) have sliding elements at least in a contact region between the retaining elements (42) and the spreader spring (135) in order to reduce wear on the spreader spring (135).

10. A brake calliper unit according to any one of claims 7 to 9,
**characterised by**
cushioning elements (137) that partially enclose at least sections of the spreader spring (135) to enable the spreader spring (135) to be held reliably in a floating hold between the application points (P1, P2).

11. A brake calliper unit according to any one of the preceding claims, the brake pad holder (40) having at least one friction pad,
**characterised in that**
the pre-tensioning unit (130) and/or the additional pre-tensioning unit (14) is/are designed to pre-tension all the bearings lying in the flux of the application force against the direction of application.

12. A brake calliper unit according to any one of the preceding claims,
**characterised by**
a brake force generator (450) that is designed to apply the application force to the calliper lever arm structure (110, 210), the brake force generator (450) having an adjusting element that is designed, on one hand, to increase a length of the brake force generator if pad wear is identified when the disc brake is applied and/or released and, on the other, to keep the length of the brake force generator constant when the brake is released.

13. A brake calliper unit according to any one of the preceding claims,
**characterised by**
a retaining structure (150) that is designed to fasten the brake calliper unit rotatably on a bogie or a frame of the vehicle.

14. A disc brake having a brake calliper unit according to any one of the preceding claims.

15. A vehicle, in particular a rail vehicle, having a disc brake according to claim 14 or a brake calliper unit according to any one of claims 1 to 13.

## Revendications

1. Ensemble à étrier de frein pour un frein à disque d'un véhicule, notamment d'un véhicule ferroviaire, comprenant au moins deux fixations (40) de garniture de frein, entre lesquelles un disque de frein du frein à disque peut être introduit,
**caractérisé par**
- une structure (110, 210) de bras de levier d'étrier, qui es constituée pour, lors de l'actionnement du frein à disque, transmettre une force de serrage aux fixations (40) de garniture de frein ;
- des suspensions (420) pivotantes, auxquelles les fixations (40) de garniture de frein sont fixées, respectivement ; et
- au moins une unité (130) de précontrainte, qui est constituée pour précontraindre au moins l'une des suspensions (420) pivotantes à l'encontre de la force de serrage.

2. Unité à étrier de frein suivant la revendication 1,
**caractérisée en ce que**
la structure (110, 210) de bras de levier d'étrier définie deux bras (110, 210) de levier montés pivotants et l'unité à étrier de frein a, en outre, une unité (140) supplémentaire de précontrainte, qui est constituée pour précontraindre au moins l'un des bras (110, 210) de levier pivotants à l'encontre de la force de serrage.

3. Unité à étrier de frein suivant la revendication 1 ou la revendication 2,
**caractérisée en ce que**
la au moins une unité (130) de précontrainte a deux unités (130) de précontrainte et/ou il est constitué deux unités (140) supplémentaires de précontrainte pour obtenir, des deux côtés du disque de frein, un intervalle aussi égal que possible entre le disque de frein et les fixations de garniture de frein.

4. Unité à étrier de frein suivant l'une des revendications précédentes,
**caractérisée en ce que**
l'unité (130) de précontrainte et/ou l'unité (140) supplémentaire de précontrainte sont des éléments de ressort, qui donne une force de ressort dans la direction de précontrainte.

5. Unité à étrier de frein suivant l'une des revendications précédentes,
**caractérisée en ce que**
la suspension (420) pivotante a un axe (421) de retenue et l'unité (130) de précontrainte comprend un ressort de torsion, qui est enroulé, au moins une fois, autour de l'axe (421) de retenue et qui est constitué pour appliquer une force de couple à la au moins une suspension (420) pivotante.

6. Unité à étrier de frein suivant l'une des revendications 2 à 5,
**caractérisée en ce que**
les bras (110, 210) de levier pivotants sont montés chacun tournant autour d'un axe (171, 172) de pivotement et l'unité (140) supplémentaire de précontrainte comprend un ressort de torsion, qui est enroulé au moins une fois autour de l'un des axes (171) de pivotement et qui est constitué pour appliquer une force de couple au au moins un bras (110) de levier pivotant.

7. Unité à étrier de frein suivant l'une des revendications 1 à 6, dans laquelle la structure (110, 210) de bras de levier d'étrier définit deux bras (110, 210) de levier montés pivotants, qui maintiennent, respectivement, pivotants les fixations (40) de garniture de freins opposées,
**caractérisée en ce que**
l'unité (130) de précontrainte comprend au moins un ressort (135) d'écartement pour appliquer aux deux fixations (40) de garniture de frein opposées, entre des points (P1, P2) d'attaque respectifs, une précontrainte à l'encontre de la force de serrage.

8. Unité à étrier de frein suivant la revendication 7, dans laquelle les fixations (40) de garniture de frein opposées sont, par des éléments (161) de fixation, montées pivotante autour d'axe de pivotement vertical sur les bras (110, 210) de levier,
**caractérisée en ce que**
les fixations (40) de garniture de frein ont chacune un élément (42) de retenue pour retenir pivotant le ressort (135) d'écartement aux points (P1, P2) d'attaque et le ressort (135) d'écartement s'étend en forme de U entre les points (P1, P2) d'attaque sur les éléments (42) de retenue, les points (P1, P2) d'attaque et les éléments (161) de fixation s'étendant suivant une ligne.

9. Unité à étrier de frein suivant la revendication 8,
**caractérisée en ce que**
les éléments (42) de retenue ont chacun un guidage (46) en forme de fente pour le ressort (135) d'écartement et les éléments (42) de retenue ont au moins, sur une partie de contact entre les éléments (42) de retenue et le ressort (135) d'écartement, des éléments de glissement pour diminuer une usure du ressort (135) d'écartement.

10. Unité à étrier de frein suivant l'une des revendications 7 à 9,
**caractérisée par**
des éléments (137) de rembourrage, qui entourent, par endroits au moins en partie, le ressort (135) d'écartement pour rendre possible une fixation flottante fiable du ressort (135) d'écartement entre les points (P1, P2) d'attaque.

11. Unité à étrier de frein suivant l'une des revendications précédentes, la fixation (40) de garniture de frein comprenant au moins une garniture de friction,
**caractérisée en ce que**
l'unité (130) de précontrainte et/ou l'unité (140) supplémentaire de précontrainte est/sont constitués pour précontraindre, à l'encontre de la force de serrage, tous les paliers se trouvant dans le flux de la force de serrage.

12. Unité à étrier de frein suivant l'une des revendications précédentes,
**caractérisée par**
un producteur (450) de force de freinage, qui est constitué pour provoquer la force de serrage sur la structure (110, 120) de bras de levier d'étrier, le producteur (450) de force de serrage ayant un élément de rattrapage, qui est constitué pour, d'une part agrandir la longueur du producteur de frein de serrage, si, lors de l'application et/ou du desserrage du frein à disque, il est détecté une usure de garniture, et maintenir d'autre part constante la longueur du producteur de force de frein, si le frein est desserré.

13. Unité à étrier de frein suivant l'une des revendications précédentes,
**caractérisée par**
une structure (150) de retenue, qui est constituée pour fixer l'unité à étrier de frein de manière pivotante à un boggie ou à un châssis du véhicule.

14. Frein à disque ayant une unité à étrier de frein suivant l'une des revendications précédentes.

15. Véhicule, notamment véhicule ferroviaire, ayant un frein à disque suivant la revendication 14 ou une unité à étrier de frein suivant l'une des revendications 1 à 13.²
